Europäisches Patentamt

European Patent Office

Office européen des brevets

(11) Publication number: **0 381 787**
**A1**

# (12) EUROPEAN PATENT APPLICATION

(21) Application number: 89102039.8

(22) Date of filing: 06.02.89

(51) Int. Cl.5: **B25B 21/00, B25B 21/02, F16D 43/12**

(43) Date of publication of application:
**16.08.90 Bulletin 90/33**

(84) Designated Contracting States:
**AT BE DE ES FR GB IT LU NL**

(71) Applicant: **Huang, Dora Hsiao-Ling**
**No. 14-1, Lane 53 Chung Chen St.**
**Shin Chuang Taipei Hsien(TW)**

(72) Inventor: **Huang, Chen Shu-Hsiao**
**No. 350, Sec. 3 Min-Ji Road**
**Tai Shan Hsiang Taipei Hsien(TW)**

(74) Representative: **Goddar, Heinz J., Dr. et al**
**FORRESTER & BOEHMERT**
**Widenmayerstrasse 4/I**
**D-8000 München 22(DE)**

(54) Improvements in wrenches.

(57) A torque wrench primarily intended for loosening and/or tightening the wheel nuts of vehicles comprises a housing assembly (1) which includes a casing (10) for a motor (M), a tool casing (11) connected to or formed integrally with the motor casing (10), a handle (14) having a push-button (30) for controlling operation of the motor and a switch (33) for controlling the direction of rotation of the motor, and a plug (4) for connecting the motor to the electrical circuit of a vehicle. The tool casing (11) contains a tool assembly (2) comprising a drive shaft (24) arranged to be driven by the motor (M), a transmission member (22) mounted on the drive shaft for rotation therewith, a drive member (21) arranged to be driven by the transmission member and having means for engaging a follower member (26) provided on a follower shaft (25). Resilient means (282) are arranged to act on the transmission member (22) via a disc (27) and pins (204) in such a manner that the follower member is not engageable by said means on the drive member (21) until the force of the resilient means (282) has been overcome by centrifugal force when the motor (M) is running. The transmission member (22), drive member (21) and follower member (26) are housed in a space formed between side walls (201, 202) of a main body member (21), the drive member being pivotally mounted on a pin (205) extending between the side walls of said main body member and the pins (204) extending through the side wall (201). The end of the follower shaft (25) is provided with means for engaging a vehicle wheel nut or the like.

FIG.1

## IMPROVEMENTS IN WRENCHES

This invention relates to wrenches and is particularly concerned with wrenches for tightening and loosening the wheel nuts of vehicles.

Vehicle wheels must be held securely in place if they are not to become loose and fall off the vehicle when the latter is being driven. Normally, vehicle wheels are mounted on screw-threaded bolts and are held in position by means of wheel nuts. When such wheel nuts are tightened by a mechanic in a garage, it is usual to utilise a power-operated torque wrench to ensure that the correct torque or tightening force is applied to the wheel nuts.

However, if it is necessary to change a wheel on the open road, for example because of a flat tyre, a power-operated torque wrench is usually not available and simple manual tools have to be used. These usually take the form of a hexagonal socket designed to fit over the wheel nuts and a fairly short lever which may be cast integrally with the socket or be separate therefrom, the idea being to economise space for stowage of the tool on the vehicle when the tool is not required for use.

For the purpose of ensuring stability and safety for the vehicle in motion, much emphasis has been put on the attention paid to the tightening of wheel nuts and the evenness of force applied to each of the nuts. In the event of a punctured tyre or insufficient tyre pressure when the vehicle is on a journey, air compression equipment which is professionally used by maintenance workshops is not available and simple tools have to be used manually to change a wheel.

Although much energy has been expended in attempts to release the wheel nuts, drivers have often found it impossible to loosen the nuts manually. This applies particularly to the physically infirm and to female drivers. Eventually, it has often been necessary to seek help from a maintenance workshop. Equal inconvenience is found in the air compression equipment which is used by maintenance workshops. Although such equipment is highly efficient in wheel replacement, the area of service is confined to certain specific sites and is not readily available to all so that it is often impossible to service more than one vehicle at a time. Moreover, the equipment is noisy in operation, it is costly and the size makes transportation difficult.

The present invention aims to overcome the above-mentioned disadvantages and to provide a torque wrench which can be operated by the electrical power supply of the vehicle itself.

Accordingly, the present invention provides a wrench having a housing assembly including a motor casing containing a reversible motor, a tool casing connected to or formed integrally with the motor casing, a handle having means for controlling the operation and rotational direction of the motor mounted therein and means for connecting the motor to an electrical power supply wherein the power connecting means include a plug adapted to be fitted into the lighting socket of a vehicle and wherein the tool casing contains a tool assembly comprising a drive shaft arranged to be driven by the motor, a transmission member mounted on the drive shaft for rotation therewith, a drive member arranged to be driven by the transmission member and having means for engaging with a follower shaft and resilient means arranged to act on the transmission member in such a manner that the follower shaft is not engageable by said means on the drive member until the force of said resilient means is overcome by centrifugal force when the motor is running, the follower shaft being provided with means for engaging a nut for a vehicle wheel or the like.

Preferably, the tool assembly further includes a main body member having a pair of side walls defining a space in which the transmission member and drive member are located, the drive shaft extending through the main body member and the transmission member being keyed on the drive shaft.

The drive member is desirably pivotally mounted on a pin the ends of which are located in the end walls of the main body member. In this case, the drive member may be provided with wing-like parts which are engageable with projections provided on a follower member which is secured to or formed integrally with the follower shaft.

Preferably, the drive member is further provided with an extension part which is engageable in a notch provided in the transmission member by means of which the drive member is driven by the transmission member. The wing-like parts of the drive member may be provided with a radiussed inner surface which is engageable with a radiussed part of the transmission member until centrifugal force overcomes the force of the said resilient means.

According to a preferred embodiment of the invention, the main body member has a tube extending from one of its side walls and surrounding the drive shaft, said resilient means being mounted on the tube and arranged to act on a disc, likewise mounted on the tube, to cause said disc to move the transmission member to a position in which the said radiussed part engages the radiussed inner surface of the drive member.

It is also preferred to provide second resilient means which are arranged, when the force of the first-mentioned resilient means has been overcome by centrifugal force, to move the transmission member to a second position in which the radiussed part is out of engagement with the radiussed inner surface of the drive member, a wing-like part of said drive member then being engageable with a respective one of the projections on the follower member to drive the follower shaft. The second resilient means desirably comprise a coil spring mounted on the drive shaft.

The present invention therefore provides a vehicle-carrying electric power wrench which saves manual effort and which can obtain electric power by plugging into a suitable socket of the vehicle's electric circuit and which can also control the follower shaft automatically to determine the torque required so as to prevent damage. The wrench according to the invention is also economical of space so that it can conveniently be carried on a vehicle.

The invention will now be further described, by way of example, with reference to the drawings, in which:-

Fig. 1 is a part-sectioned side elevation of one embodiment of a torque wrench according to the invention;

Fig. 2 is an exploded perspective view of part of the wrench shown in Fig. 1;

Fig. 3 is an exploded perspective view of the arrester forming part of the wrench shown in Fig. 1;

Fig. 4 is a side view of the arrester and parts of the drive mechanism of the wrench shown in Fig. 1;

Fig. 5 is a section taken on the line 5-5 in Fig. 1 in the direction of the arrows;

Fig. 6 is a part-sectioned view, corresponding to Fig. 1, but showing the various relative positions of components of the drive mechanism when the motor is running; and

Fig. 7 is a section taken on the line 7-7 in Fig. 6 in the direction of the arrows;

Fig. 8 is a perspective view showing the relative positions between a main drive member and a transmission control member in one position of the latter; and

Fig. 9 is a perspective view, similar to Fig. 8, but showing the transmission control member in an alternative position.

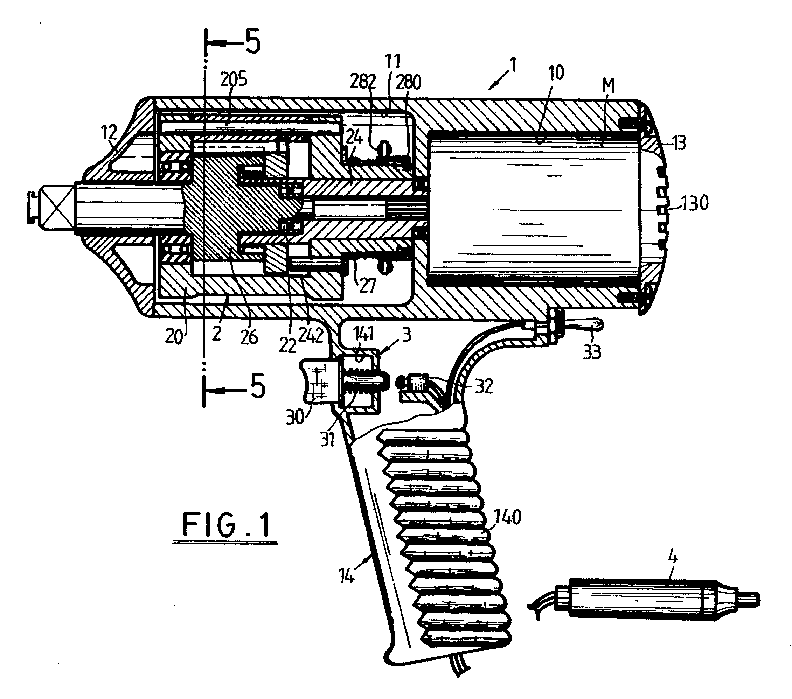

Reference will first be made to Fig. 1 of the drawings in which the wrench according to the invention comprises a housing assembly 1, a tool assembly 2, a trigger assembly 3 and an electrical plug 4. The housing assembly 1 consists of a motor casing 10, a tool casing 11, a front cover 12, a rear cover 13 and a handle 14. The interior elements of the motor casing 10 include a reversible motor M, of which the source of power can be obtained by plugging-in the plug 4 into the lighting socket of a vehicle. The tool casing 11 is located immediately in front of the motor casing 10 and contains the tool assembly 2. The front cover 12 is tightly fixed by screws onto the lateral sides of the tool casing 11 and the rear cover 13 is also tightly fixed in the same manner onto the lateral side of the motor casing 10. The motor casing 10 is substantially circular in cross-section and the rear cover 13 takes the form of a circular disc in the central area of which are provided a number of parallel louvre openings 130. The handle 14 is adjacent to the bottom of the motor casing 10 and the tool casing 11, and takes the form of the handle of a pistol with parallel ribs 140 on its surface to facilitate a firm grip of the handle when the tool is being used. The trigger assembly 3 is mounted in the handle adjacent its upper end and comprises a compression spring 31 mounted on a rod extending from the base of a push-button 30 and housed in a rectangular shaped body 141 inside the handle 14. Part of the push-button 30 projects from the front of the handle 14 while the rod of the push-button 30 projects out of the rectangular shaped body 141 and is in alignment with a micro switch 132 which controls operation of the motor M. The direction of rotation of the drive shaft of the motor is controlled by a switch 33 which is mounted to the rear of the trigger assembly 3 at the upper end thereof.

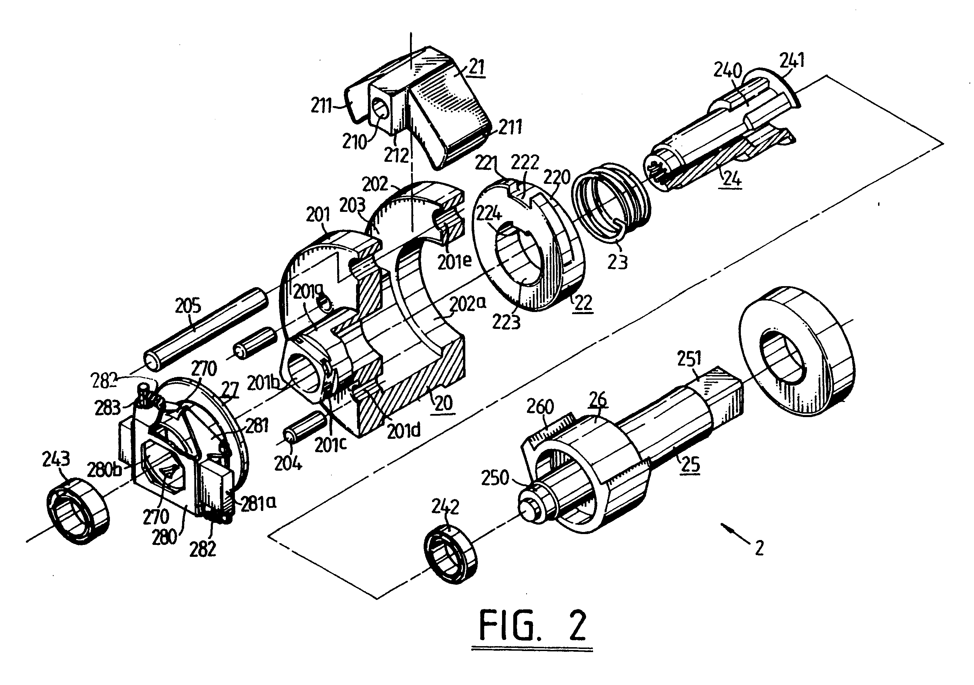

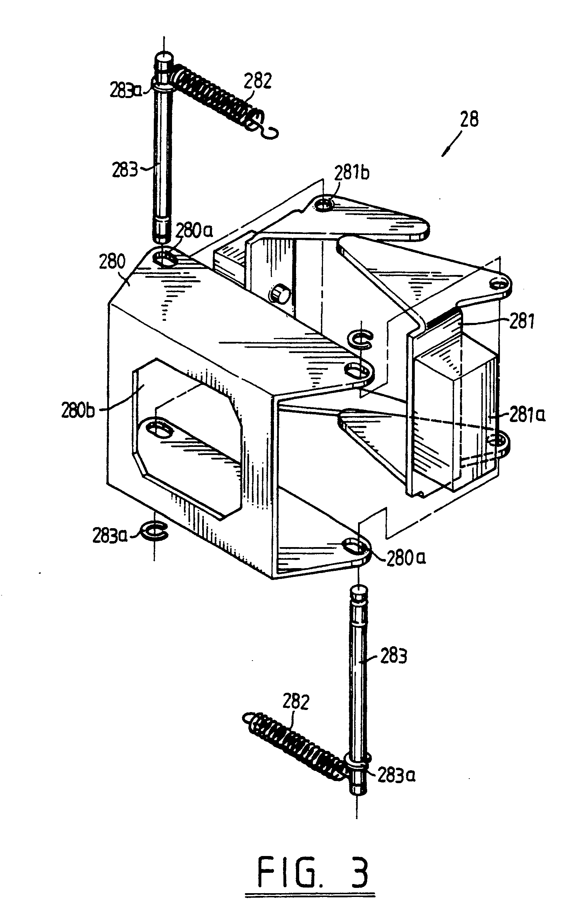

Turning now to Fig. 2 of the drawings, it can be seen that the tool assembly 2 comprises a main body 20, a drive member 21, a transmission member 22, an elastic member 23, a drive shaft 24, a follower shaft 25, a follower member 26 and a convex disc 27. The main body 20 consists of a first side wall 201, a second side wall 202 and a hollow space 203 between the first and the second side walls 201 and 202. A circular tube 201a is set at the centre of the first side wall 201 and projects therefrom, the outwardly projecting end of said tube having a series of flats to form a substantially square end 201b with notches or slots 201c being provided in each of the corners. The convex disc 27 is mounted on the tube 201a and the arrester 28 is also mounted on the end of the tube and is secured thereto by means of the slots 201c. The arrester 28 is composed of the assembly of a U-shaped fixing member 280, two U-shaped pushing members 281, two springs 282 and two pins 283 as shown in Fig. 3. Each pushing member 281 is provided with aligned holes 281b for receiving a respective pin 283 which extends through respective aligned pin slots 280a in the fixing member 280. Each pin is provided at each end with a pair of spaced grooves the inner of which is adapted to receive a respective circlip 283a for retaining the pin in position and the outer of which is adapted to receive a respective looped end of a respective spring 282. A respective counter balance weight block 281a is provided on each of the pushing members 281 the weight of which can be automatically regulated, under the influence of centrifugal force when the tool is in operation, to exert a driving force on the convex disc 27. The ends of the arms of the fixing members 281, remote from the weights 281a, are arranged to sandwich between them a triangular projection 270 extending from the otherwise circular wall of the disc 27. The springs 282 serve to urge the said ends of the pushing members 281 into arrangement with the triangular projections 270.

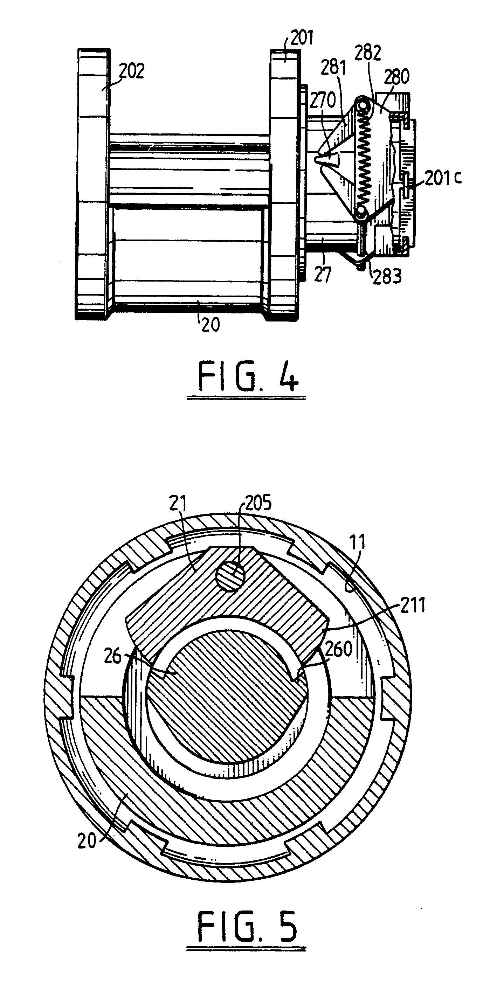

The base of the fixing member 280 has a substantially square aperture 280b by means of which the arrester 28 can be mounted on the end of the tube 201a with the base of the fixing member received in the slots 201c as shown in Fig. 4. Owing to the functioning of the return force of the springs 282, a spring force will be produced by the feet of the two U-shaped pushing members 281 to force the convex disc 27 against the side wall 201 of the main body 20 when the motor is not running. When the motor is running, the arrester 28 is arranged to rotate and centrifugal force acting on the counter balance weight blocks 281a located on the U-shaped pushing members 281, will result in movement of the angular position of the said U-shaped pushing members 281 so as to cause the convex disc 27 to move angularly in a direction away from the first lateral wall 201 of the main body 20 until the said centrifugal force becomes smaller than the return force produced by the springs 282. This will cause the two U-shaped pushing members 281 to resume their former position, so that the ends of the pushing members 281 will once more push the convex disc 27 back to its former position.

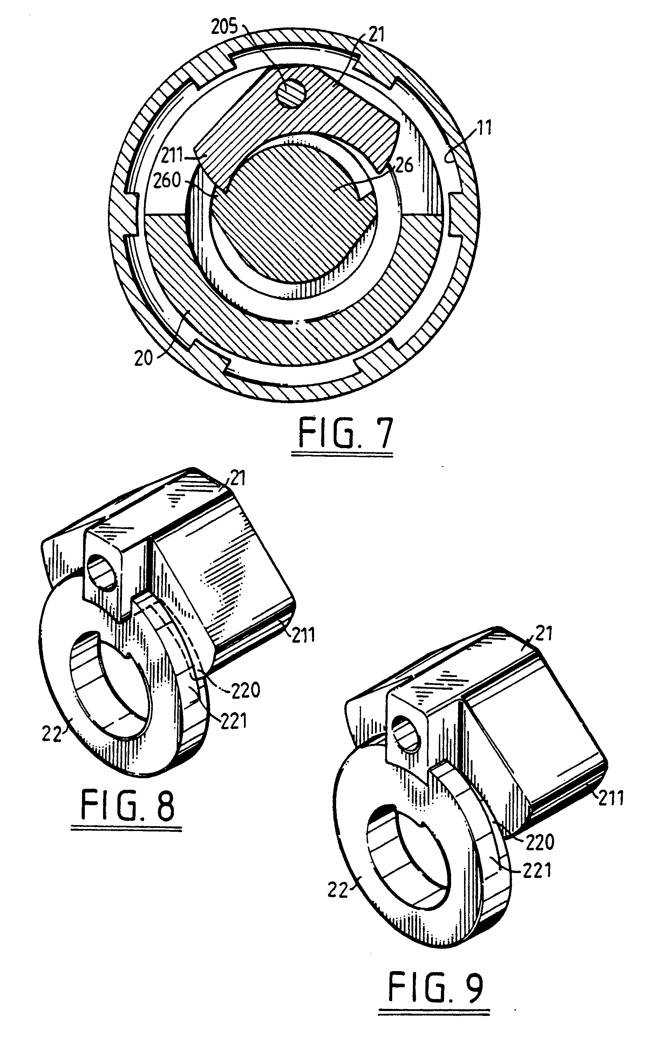

In addition to having a circular tube 201a projecting from the centre of the first side wall 201 for the mounting of the convex disc 27 and for the tight sandwiching of the arrester 28, bores 201d are also provided in said side wall 201 of the main body 20, said bores 201d being set at equal radiuses away from the centre of the first side wall 201 and spaced apart from each other by 120°. A respective movable pin 204 is inserted into each of the bores 201d. In addition, a bore 201e of a comparatively larger diameter is provided in the first side wall 201 and is aligned with a like bore passing through the second wall 202, in the region of the space 203, to facilitate the fixing in said space of the drive member 21 between the two side walls by a fixing pin 205. The external diameter of the fixing pin 25 is slightly smaller than the diameter of the bore in the drive member 21 through which the pin extends so that the drive member 21 is a loose fit on the pin and is free to conduct left and right rotations and backward and forward motions. The drive member 21 is composed of a wing part 211 having its two lateral sides slightly dropped slantingly downward and a central extension part 212 projecting from one side of the central portion of the wing part 211. For a better understanding, reference should be made to Fig. 5 or Fig. 7 of the drawings. As viewed from the side of the drive member 21, it can be seen that the plane of the interior edge of its two lateral wing parts 211 is arcuate and its radius of curvature is in conformity with a radiussed part 220 of the transmission member or driving control device 22. In other words, when the drive control device 22 is placed in the hollow space 203 in the main body 20, its radiussed part 220 is in contact with the arcuate interior surface of the drive member 21. In addition to having the radiussed part 220, the transmission member 22 has another part 221 of larger circumference lying in front of the part 220. In the upper portion of the larger part 221, a slot 222 is provided which is adapted to receive the extension part 212 of the drive member 21 (as shown in Figs. 8 and 9). Moreover, the transmission member 22 has a central aperture 223 with a rectangular key 224 which is designed to engage in a corresponding keyway 240 provided in the drive shaft 24 so as to allow the transmission member 22 and the drive shaft 24 to conduct a synchronised motion. The interior of the drive shaft 24 is splined, the splines being arranged, after the drive shaft 24 has been passed through the elastic member 23 and the bores in the transmission member 22 and the tube 201a of the first side wall 201 of the main body 20, to engage with corresponding splines on the output shaft of the motor M, so as to receive the rotating force exerted by the motor M. A stop ring 241 or flange projects from the end of the drive shaft 24 to prevent the elastic member 23 from falling off the shaft. A bearing 242 is mounted in this end of the drive shaft to facilitate the mounting of the end 250 of the follower shaft 25. The follower member 26 is mounted on the follower shaft 25 adjacent to the end 250 and takes the form of a ring, having tooth parts 260 projecting upwardly adjacent to each to its lateral sides.

When the transmission member 22 is in the position shown in Fig. 8 of the drawings, the inner radiussed surface of the wing part 211 of the drive member 21 is in engagement with the radiussed part 220 of the transmission member and the ends of the wing part 211 are free to rotate without engaging the tooth parts 260 on the follower member 26 as shown in Fig. 5 of the drawings. However, if the transmission member 22 is moved to the position shown in Fig. 9 of the drawings, the drive member 21 is free to pivot about the pin 205 with respect to the transmission member and one or other of the ends of the wing part 211 can engage a respective one of the tooth parts 260 on the follower member 26 (as shown in Fig. 7 of the drawings) in a manner to be hereinafter described.

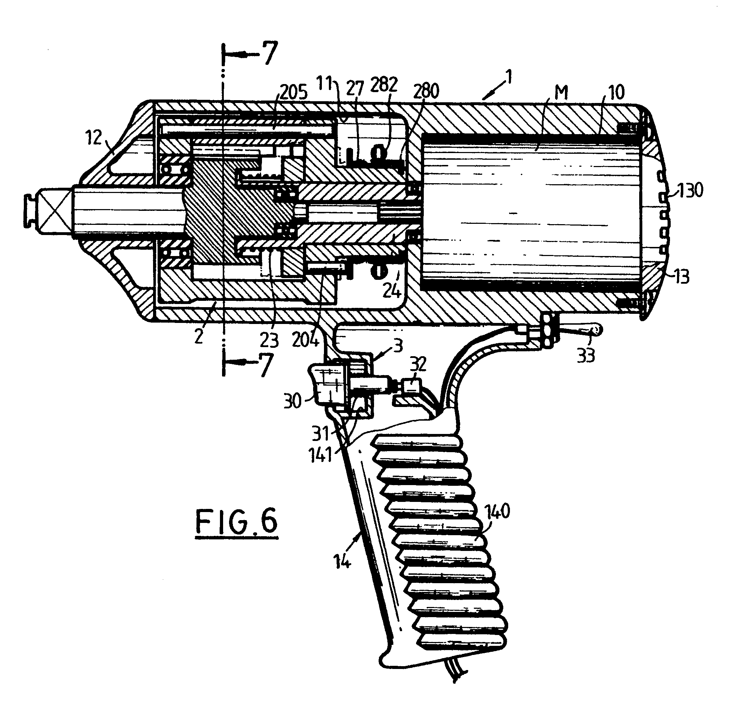

If the wrench according to the invention is required for use, the plug 4 is first inserted into a lighting socket for power supply of the vehicle and the push-button 30 is depressed to close the micro-switch 32 and start the motor M. At this time, the various components of the drive mechanism are in the positions shown in Fig. 1 of the drawings in which the convex disc 27 is pushed by the pushing members 281, under the action of the springs 282, against the side wall 201 of the body member 20. The convex disc 27 acts via the pins 204 to hold the transmission member 22 in the position shown in Fig. 8 of the drawings against the action of the spring 23. When the motor M is started, the drive shaft 24 will be driven by the output shaft of the motor and will in turn drive the transmission member 22 in the same direction of rotation by virtue of the engagement of the key 224 in the keyway 240. The drive member 21 will also be driven in the same direction of rotation because of the engagement of the extension part 212 in the slot 222. However, by virtue of the engagement of the inner radiussed surface of the wing part 211 of the drive member 21 with the radiussed part 220 of the transmission member 22, the tooth parts 260 are not engaged by the ends of the wing part 211 so that, at this stage, the follower shaft 25 is not driven. The drive member 21 is, however, effective to drive the main body 20, by virtue of the connection provided by the fixing pin 205, in the same direction of rotation and at the same speed. The convex disc 27 and the arrester 28 will thus also be rotated and when the speed of rotation of the arrester 28 attains a sufficient value, centrifugal force exerted on the counter weights 281a will cause the pushing members 281 to move away from the projections 270 on the convex disc 27. The spring 23 is now effective to move the transmission member 22 from the position shown in Fig. 8 to the position shown in Fig. 9 of the drawings and, via the said transmission member 22 and pins 204, to move the convex disc 27 away from the side wall 201 towards the arrester 28 from the position shown in Fig. 1 to the position shown in Fig. 6 of the drawings. The drive member 21 is now free to pivot about the pin 205 and, under the action of centrifugal force, one of the ends of the wing part 211 will engage a respective one of the tooth parts 260, as shown in Fig. 7, so that the follower member 26 and hence the follower shaft 25 will be driven in the same direction and at the same speed as the drive shaft 24.

In this manner, a wrench mounted at the end of the square shaft 251 of the follower shaft 25 will then be able to tighten or loosen the fixing nuts of a vehicle wheel. The switch 33 provided at the rear of the handle 14 controls the direction of rotation of the motor M and hence the direction of rotation of the follower shaft 25 whereby, in one position of the switch 33, the shaft 25 rotates in a direction to loosen wheel nuts and, in the other position of the switch 33, the shaft 25 rotates in a direction to tighten wheel nuts.

The force of the springs 23 and 282 and the weights of the counter balance weights 281a and the drive member 21 are so arranged that, when wheel nuts have been tightened to a predetermined torque, the follower shaft 25 jams and ceases to rotate thereby immediately stopping rotation of the drive member 21 and transmission member 22. The centrifugal force ceases immediately, enabling the pushing members 281 to force the convex disc 27 back towards the side end wall 201 of the body member 20 and thus to move the transmission member back to the position shown in Fig. 8 of the drawings. Thus the drive between the drive shaft 24 and follower shaft 25 is immediately disconnected and damage to the motor M is prevented. Moreover, excessive tightening of the wheel nuts is also avoided.

Summarising the above description, it is understood that the wrench according to the present invention is one which can be directly plugged into the lighting socket of a vehicle for power supply, having the steering and starting of its motor controlled through the switching of its start button to activate rotation of the rotor of the reversible motor, and also having the rotating force of its motor conveyed through the drive member of the tool assembly onto the transmission member and the main body. It will also exert an auto control through the arrester of the projected circular tube in correspondence with the rotating speed made by the motor to determine whether a contact between the radiussed part of the transmission member and the arcuate interior surface of the drive member is to be made or not and to further control and determine whether a continuous driving will be provided to the follower shaft or not, so as to avoid damage to the components by a high torque force, and thus lengthen the life of the equipment.

The features disclosed in the foregoing description, in the claims and/or in the accompanying drawings may, both, separately and in any combination thereof, be material for realising the invention in diverse forms thereof.

## Claims

1. A wrench having a housing assembly including a motor casing containing a reversible motor, a tool casing connected to or formed integrally with the motor casing, a handle having means for controlling the operation and rotational direction of the motor mounted therein and means for connecting the motor to an electrical power supply wherein the power connecting means include a plug adapted to be fitted into the lighting socket of a vehicle and wherein the tool casing contains a tool assembly comprising a drive shaft arranged to be driven by the motor, a transmission member mounted on the drive shaft for rotation therewith, a drive member arranged to be driven by the transmission member, and having means for engaging with a follower shaft, and resilient means arranged to act on the transmission member in such a manner that the follower shaft is not engageable by said means on the drive member until the force of said resilient means is overcome by centrifugal force when the motor is running, the follower shaft being provided with means for engaging a nut for a vehicle wheel or the like.

2. A wrench according to claim 1, wherein the tool casing includes a detachable cover at one end and wherein the motor casing is at the other end of the tool casing.

3. A wrench according to claim 2, wherein the motor casing is provided with a detachable cover at an end remote from the tool casing, said cover being provided with a plurality of louvres.

4. A wrench according to any preceding claim, wherein the motor casing and/or the tool casing are/is circular in cross-section.

5. A wrench according to any preceding claim, wherein the handle takes the form of the handle of a pistol and projects from one side of the tool casing and/or the motor casing and wherein the control means comprise a push-button for switching the motor on and off and a switch for controlling the direction of rotation of the motor.

6. A wrench according to any preceding claim, wherein the tool assembly further includes a main body member having a pair of side walls defining a space in which the transmission member and drive member are located, the drive shaft extending through the main body member and the transmission member being keyed on the drive shaft.

7. A wrench according to claim 6, wherein the drive member is pivotally mounted on a pin the end of which are located in the end walls of the main body member.

8. A wrench according to claim 7, wherein the drive member is provided with wing-like parts which are engageable with projections provided on a follower member which is secured to or formed integrally with the follower shaft.

9. A wrench according to claim 8, wherein the drive member is further provided with an extension part which is engageable in a notch provided in the transmission member by means of which the drive member is driven by the transmission member.

10. A wrench according to claim 9, wherein the wing-like parts of the drive member are provided with a radiussed inner surface which is engageable with a radiussed part of the transmission member until centrifugal force overcomes the force of the said resilient means.

11. A wrench according to claim 10, wherein the main body member has a tube extending from one of its side walls and surrounding the drive shaft, said resilient means being mounted on the tube and arranged to act on a disc, likewise mounted on the tube, to cause said disc to move the transmission member to a position in which the said radiussed part engages the radiussed inner surface of the drive member.

12. A wrench according to claim 11, wherein the disc is arranged to move the transmission member by means of at least one pin extending through and axially movable with respect to said one side wall of the main body member.

13. A wrench according to claim 10 or claim 11, wherein the resilient means comprise at least one spring arranged to act on at least one pushing member which is engageable with the disc, the or each pushing member being provided with a counter weight which, under the influence of centrifugal force, is arranged to overcome the force of the spring(s) and to reduce or eliminate the force of the pushing member acting on the disc.

14. A wrench according to claim 13, wherein two pushing members are provided which are mounted on a framework which is in turn mounted on the tube extending from the main body.

15. A wrench according to claim 14, wherein the framework is substantially U-shaped, the base of the frame having an aperture designed to accommodate the end of the tube and the pushing members being mounted at the ends of the arms of the frame and sandwiched therebetween.

16. A wrench according to claim 15, wherein the said aperture is substantially rectangular with inclined corners and wherein the end of the tube is provided with slots adapted to receive said inclined corner regions of the frame defining the aperture.

17. A wrench according to any one of claims 11 to 16, wherein second resilient means are provided which are arranged, when the force of the first-mentioned resilient means has been overcome by centrifugal force, to move the transmission member to a second position in which the radiussed part is out of engagement with the radiussed inner surface of the drive member, a wing-like part of said drive member then being engageable with a respective one of the projections on the follower member to drive the follower shaft.

18. A wrench according to claim 17, wherein the second resilient means comprise a coil spring mounted on the drive shaft.

19. A wrench substantially as described herein with reference to the drawings.

FIG.1

EP 0 381 787 A1

FIG. 2

## FIG. 3

FIG. 4

FIG. 5

FIG.6

EP 0 381 787 A1

FIG. 7

FIG. 8

FIG. 9

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| Y | US-A-4 727 780 (C.S. HUANG) <br> * The whole document * <br> --- | 1-12,17,18 | B 25 B 21/00 <br> B 25 B 21/02 <br> F 16 D 43/12 |
| Y | US-A-2 564 224 (W.G. MITCHELL et al.) <br> * Column 5, line 6 - column 6, line 29; figures 1,2 * | 1-12,17,18 | |
| A | | 13 | |
| A | US-A-2 219 865 (C.E. FITCH) <br> * Page 2, left-hand column, line 42 - page 2, right-hand column, line 12; figures 1,2 * <br> --- | 1,13 | |
| A | DE-A-1 928 972 (J. MÜLLER) <br> * Page 3, lines 9-21; page 5, line 25 - page 6, line 3; claims 1,2; figures 1,5 * <br> --- | 1-5 | |
| A | FR-A-2 066 788 (ROBERT BOSCH GmbH) <br> * Page 1, lines 11-16; page 4, lines 3-17; figures 1,7 * <br> --- | 1 | |
| A | GB-A-2 096 250 (UNISEARCH LTD) <br> * Figures 2,4; page 3, lines 23-91 * <br> --- | 1,13 | TECHNICAL FIELDS SEARCHED (Int. Cl.5) <br><br> B 25 B <br> F 16 D |
| A | US-A-4 004 859 (J.A. BORRIES) <br> * Abstract; figures 1,3 * <br> --- | 1,13 | |
| A | GB-A- 318 623 (AKTIEBOLAGET NORDISKA ARMATUR-FABRIKERNA) <br> * Page 2, lines 16-78; figures 2-4 * <br> --- | 1 | |
| A | US-A-2 886 997 (J.A.W. MADSEN) <br> * Column 4, line 47 - column 5, line 57; figures 1-8 * <br> ---       -/- | 1-12 | |

The present search report has been drawn up for all claims

| Place of search | Date of completion of the search | Examiner |
|---|---|---|
| THE HAGUE | 18-09-1989 | MAJERUS H.M.P. |

**European Patent Office**

**EUROPEAN SEARCH REPORT**

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| A | FR-A-2 485 977 (A. EPINOUX)<br>* Page 3, line 36 - page 4, line 16;<br>page 5, line 20 - page 6, line 3;<br>figures 2,3,8 *<br>----- | 1 | |
| | | | TECHNICAL FIELDS SEARCHED (Int. Cl.5) |

The present search report has been drawn up for all claims

| Place of search | Date of completion of the search | Examiner |
|---|---|---|
| THE HAGUE | 18-09-1989 | MAJERUS H.M.P. |

EPO FORM 1503 03.82 (P0401)